# EUROPÄISCHE PATENTSCHRIFT

(11) **EP 1 151 217 B1**
(45) Veröffentlichungstag und Bekanntmachung des Hinweises auf die Patenterteilung: **27.08.2003**
(21) Anmeldenummer: 00989828.9
(22) Anmeldetag: 02.12.2000
(51) Int. Cl.: F16K 31/06

(54) **ELEKTROMAGNETISCH BETÄTIGBARES VENTIL**
ELECTROMAGNETICALLY ACTUATED VALVE
SOUPAPE A ACTIONNEMENT ELECTROMAGNETIQUE

(30) Priorität: 07.12.1999 DE 19958913
(43) Veröffentlichungstag der Anmeldung: 07.11.2001
(73) Patentinhaber: ROBERT BOSCH GMBH, 70442 Stuttgart (DE)
(72) Erfinder: PAESSLER, Wolfgang, 77833 Ottersweier (DE); BAUER, Bertram, 76571 Gaggenau (DE); SCHRADER, Jens, 77830 Buehlertal (DE); STRASSBURGER, Klaus, 77836 Rheinmuenster (DE)
(74) Vertreter: Isenbruck, Günter, Dr.
(86) Internationale Anmeldenummer: DE0004296
(87) Internationale Veröffentlichungsnummer: WO01042698

(56) Entgegenhaltungen:
- US-A- 4 397 443
- US-A- 5 139 226

## Beschreibung

Die Erfindung betrifft ein elektromagnetisch betätigbares Ventil insbesondere zum Einsatz in Kraftfahrzeugen entsprechend dem Oberbegriff des Anspruchs 1.

### Stand der Technik

Aus dem Stand der Technik sind elektromagnetische Ventile bekannt, bei denen das Öffnen und Schließen des Ventils mittels eines beweglichen Tauchankers erzielt wird. Nachteilig ist hierbei, daß sich ein durch die konstruktive Anordnung der Bauelemente in solchen Ventilen bedingter Luftspalt zwischen Spule und Mittelpol, zwischen Tauchanker und Spule sowie zwischen Tauchanker und Mittelpol ergibt, was zu einem deutlichen Magnetflußverlust führt. Ein weiterer Nachteil bei den herkömmlichen elektromagnetischen Ventilen ist, daß beim Öffnen bzw. Schließen des Ventils der aus Eisen bestehende Tauchanker auf den Mittelpol der Magnetspule aufschlägt und dabei ein deutlich hörbares Geräusch verursacht.

US 4,397,443 bezieht sich auf eine Magnetventilanordnung. Die Magnetventilanordnung umfaßt ein Ventilglied, welches in einem Gehäuse aufgenommen ist und zwischen einer ersten und einer zweiten Position zur Steuerung einer Verbindung zwischen einem Einlaßanschluß und einem Auslaßanschluß gesteuert werden kann, die an dem Gehäuse ausgebildet sind. Das Gehäuse umfaßt einen Teil aus magnetischem Material, welches mit dem Ventilglied verbunden ist. Eine Blattfeder ist mit einem ersten Ende an dem Teil aus magnetischem Material befestigt und spannt das Ventilglied in eine erst Position vor. Ferner ist ein Federrückhalter aufgenommen, der einen ersten Endanschluß umfasst, welcher das zweite Ende der Blattfeder zurückhält. Der Federrückhalter ist stationär an einem zweiten Endabschnitt am Gehäuse aufgenommen. Ferner ist im Gehäuse ein Kern aus magnetischem Material eingelassen und mit dem Teil aus magnetischem Material in Verbindung bringbar angeordnet. Ein auf den stationären Kern und das Teil aus magnetischem Material wirkender Mechanismus ist vorgesehen, um den Teil aus magnetischen Material auf den stationären Kern zuzudrehen, wodurch das Ventilglied in eine zweite Position bewegt wird. Ferner ist im Gehäuse ein Dämpfungselement mit einem Dämpfungsanschlag für das Ventilglied angeordnet. Es ist ferner ein Einstellmechanismus vorgesehen, der am Gehäuse aufgenommen ist und mit welchem die Federvorspannung der Blattfeder beeinflusst werden kann.

US 5,139,226 bezieht sich auf ein elektromechanisches Fluidkontrollventil. Das elektromechanische Ventil umfaßt einen Ventilkörper mit zumindest zwei Anschlüssen, mit welchen ein Fluid geleitet werden kann, wobei mindestens einer der Anschlüsse verschiebbar ist. Es sind elektromagnetische Betätigungseinrichtungen vorgesehen, die einen länglich ausgeformten magnetischen Kern umfassen, mit voneinander beabstandeten ersten und zweiten Schenkelabschnitten und einem mittleren Verbindungsschenkelabschnitt.

Aufgabe der vorliegenden Erfindung ist es, ein beim Öffnen und Schließen geräuscharmes bzw. geräuschoptimiertes elektromagnetisch betätigtes Ventil der im Oberbegriff des Anspruchs 1 genannten Art zu schaffen, welches gleichzeitig auch einen verbesserten Magnetfluß gewährleistet und darüber hinaus platzsparend ist.

Gelöst wird diese Aufgabe erfindungsgemäß mit dem Gegenstand des Anspruchs 1. Vorteilhafte Ausgestaltungen des erfindungsgemäßen Gegenstands sind in den Unteransprüchen 2 bis 10 ausgeführt.

### Vorteile der Erfindung

Das erfindungsgemäße elektromagnetisch betätigbare Ventil weist ein Magnetteil, ein bewegliches Ankerelement, ein Federelement und ein Ventilteil auf. Das Magnetteil umfaßt wenigstens eine auf einen Spulenkörper gewickelte Magnetspule, ein Flußleitelement und einen Mittelpol. Das Ventilteil weist ein mit dem Ankerelement zusammenwirkendes, an einem Ventilsitz das Öffnen und Schließen des Ventils steuerndes Schließelement auf.

Gemäß der vorliegenden Erfindung ist das Ankerelement des Ventils als Klappenanker ausgebildet. Die Verwendung eines Klappenankers ist einerseits von Vorteil, da dadurch das gesamte elektromagnetisch betätigbare Ventil kleiner ausgestaltet werden kann als bei Verwendung eines herkömmlichen Tauchankers. Diese platzsparende Ausgestaltung des Ventils erweitert seine Einsatzmöglichkeiten. Andererseits bringt die Verwendung eines Klappenankers einen besseren Wirkungsgrad des Magnetkreises mit sich, was unter anderem durch die hierdurch verbesserte Anordnungsmöglichkeit des Klappenankers relativ zu den anderen Bauteilen des Ventils bewirkt wird, wobei magnetflußhemmende Luftspalte weitgehend vermieden werden und nur zwischen Mittelpol und Ankerelement auftreten..

Darüber hinaus wirkt der Klappenanker erfindungsgemäß über ein Dämpfungselement mit dem Mittelpol zusammen, so daß beim Öffnen bzw. Schließen des Ventils störende Geräusche vermieden werden. Dies ist besonders wichtig. wenn das elektromagnetisch betätigbare Ventil im Fahrgastraum eines Kraftfahrzeugs, z.B. in den Sitzen zur Variation der Sitzfläche, angeordnet wird.

Vorzugsweise sind das Ankerelement und das Ventilteil in einem Gehäuse aufgenommen. Sowohl das Ankerelement, das Flußleitelement, das Schließelement, das Federelement als auch das Dämpfungselement sind in dem Gehäuse druckdicht eingeschlossen. Dies kann durch druckdichtes Einspritzen des Flußleitelementes erzielt werden. So sind alle empfindlichen Bauteile des Ventils geschützt. Das Gehäuse kann auch zwei- oder mehrteilig ausgebildet und beispielsweise durch Verkleben der Gehäuseteile fest zusammengefügt sein.

Das elektromagnetisch betätigbare Ventil weist in einer weiteren bevorzugten Ausführungsform ein Dämpfungselement mit einem Dämpfungsanschlag auf, welcher schalldämpfend wirkt, so daß eine Geräuschreduzierung beim Öffnen und Schließen des Ventils erzielt wird.

Weiterhin ist das Flußleitelement vorzugsweise als Bügel ausgebildet, welcher am Umfang der Magnetspule angeordnet ist.

In noch einer weiteren bevorzugten Ausführungsform betätigt das Ankerelement zum Öffnen und Schließen des Ventils ein Schließelement, welches als Schirmverschlußstopfen mit einer Schirmmembran ausgebildet ist. Der Schirmverschlußstopfen ist flexibel und vorzugsweise aus Silikonkautschuk hergestellt. Hierdurch wird, wenn der aus Eisen bestehende Klappenanker zum Öffnen des Ventils gegen den Schirmverschlußstopfen schlägt, eine erhebliche Geräuschreduzierung erzielt.

Das Dämfungselement und das Schließelement sind als integraler Dämpfungsschuh, welcher ebenfalls komplett aus einem elastischen Material wie beispielsweise Silikonkautschuk besteht, ausgebildet. Dieser Dämpfungsschuh ist direkt auf dem Ankerelement aufsteckbar oder anspritzbar. Diese Ausführungsform ist besonders praktisch, da sowohl die Schalldämpfung des Anschlags des Klappenankers beim Öffnen des Ventils als auch beim Schließen mit ein und derselben Vorrichtung erzielt werden, die einfach und schnell auf dem Klappenanker durch Aufstecken darauf befestigbar oder bereits angespritzt ist.

### Zeichnung

In den Zeichnungen sind zwei bevorzugte Ausführungsformen des Klappenventils dargestellt, die in der nachfolgenden Beschreibung näher erläutert sind. Es zeigen:
- Fig. 1: eine schematische Querschnittsansicht eines elektromagnetisch betätigbaren Ventils (nicht gemäß der Erfindung); und
- Fig. 2: eine schematische Querschnittsansicht der erfindungsgemäßen Ausführungsform des elektromagnetisch betätigbaren Ventils gemäß der Erfindung.

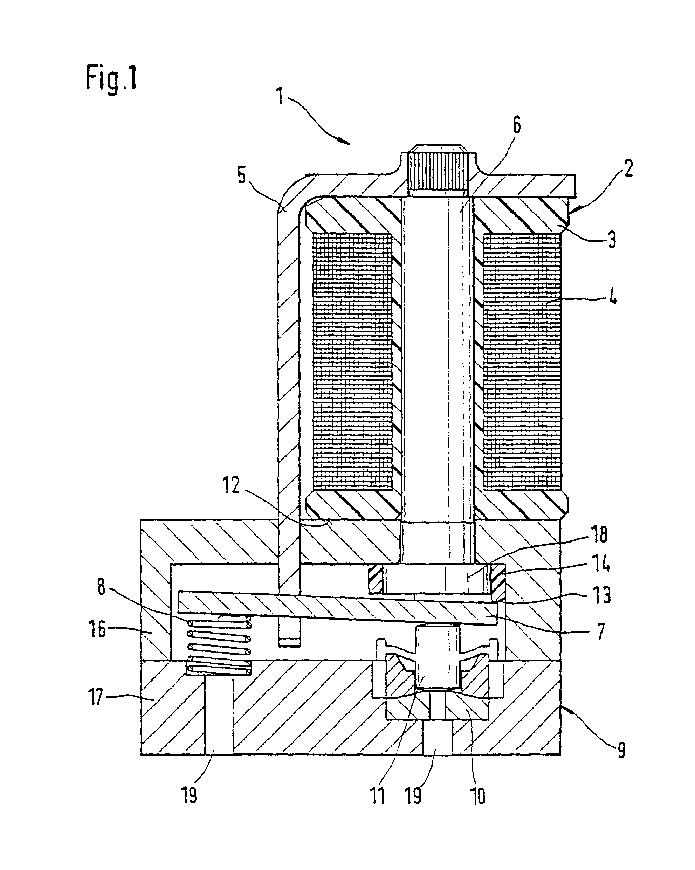

In Fig. 1 ist ein elektromagnetisch betätigbares Ventil 1 schematisch im Querschnitt dargestellt, welches ein Magnetteil 2 aufweist, welches einen Spulenkörper 3, auf den eine Magnetspule 4 aufgewickelt ist. sowie ein am Umfang des Spulenkörpers 3 rechtwinkliges Flußleitelement 5 und einen im Inneren des Spulenkörpers 3 aufgenommenen Mittelpol 6 umfaßt. Weiterhin weist das Ventil 1 ein Ventilteil 9 mit einem Schließelement 11 auf. Das Schließelement 11 zum Öffnen und Schließen des Ventils 1 wirkt an einem Ventilsitz 10 mit einem Ankerelement 7 zusammen, wobei das Ankerelement 7 als Klappenanker ausgebildet ist. Das Ankerelement ist dabei an einer Stirnfläche des Magnetteils senkrecht zur Längsachse des Mittelpols 6 angeordnet und steht mit dem Flußleitelement 5 in Verbindung. Zum Öffnen des Ventils wird durch ein induziertes Magnetfeld das Ankerelement 7 in Richtung des Mittelpols gezogen. Das Schließelement ist ein Schirmverschlußstopfen mit einer Schirmmembran, die eine Durchströmung des Ventilkanals mit einem Fluid bei angezogenem Ankerelement 7 ermöglicht. Der Schirmverschluß besteht aus einem flexiblen Material wie Silikonkautschuk. Weiterhin ist ein an dem Mittelpol 6 ausgebildetes Kopfteil 18 mit einem einen Dämpfungsanschlag 13 aufweisenden Dämpfungselement 14 versehen. Das Ankerelement 7 wird an der entgegengesetzten Seite zu der das Schließelement betätigenden Seite an einem Federelement 8 gehalten. Das Federelement 8 ist eine Spiralfeder, die das Ankerelement 7 in seine das Ventil schließende Position zurückstellt.

Sowohl das Federelement 8, ein Abschnitt des Flußleitelements 5, das Ankerelement 7, das Kopfteil des Mittelpols 18 als auch das Schließelement 11 sind in einem Gehäuse aufgenommen. Das Gehäuse besteht aus einem Gehäuseoberteil 16, welches mit dem Spulenkörper 3 in Kontakt steht, und einem Gehäuseunterteil 17, in welchem sich zwei Öffnungen 19, jeweils eine Einlaß- und eine Auslaßöffnung, und der Ventilsitz 10 befinden. Das Gehäuseoberteil 16 und das Gehäuseunterteil 17 sind fest miteinander verbunden und bilden einen druckdichten Raum. Der Ventilsitz ist im allgemeinen Bestandteil des unteren Gehäuses 17.

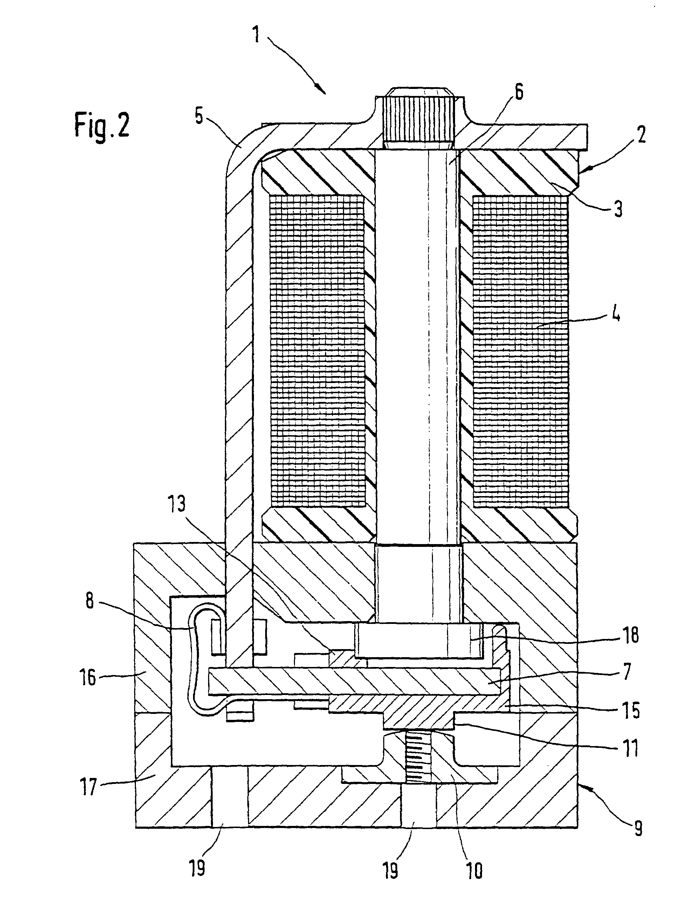

In Fig. 2 ist ein erfindungsgemäßes elektromagnetisch betätigbares Ventil 1 ebenfalls schematisch im Querschnitt dargestellt, wobei das Magnetteil des Ventils 1 den gleichen Aufbau wie das in Fig. 1 beschriebene aufweist. Es unterscheidet sich jedoch dadurch, daß das Schließelement 11 und der Dämpfungsanschlag 13 einteilig als Dämpfungsschuh 15 ausgebildet sind. Der Dämpfungsschuh 15 ist direkt auf dem Ankerelement 7 aufgesteckt oder aufgespritzt. Darüber hinaus ist als Federelement 8 eine Blattfeder verwendet, welche an einem in das Gehäuse hineinragenden Endabschnitt des Flußleitelements 5 und an einem Abschnitt des Ankerelements 7 befestigt ist. Der Aufbau des Gehäuses sowie die Anordnung der darin aufgenommenen Bauelemente des elektromagnetisch betätigbaren Ventils 1 entsprechen denen in Fig. 1.

### Bezugszeichenliste

- 1: Ventil
- 2: Magnetteil
- 3: Spulenkörper
- 4: Magnetspule
- 5: Flußleitelement
- 6: Mittelpol
- 7: Ankerelement
- 8: Federelement
- 9: Ventilteil
- 10: Ventilsitz
- 11: Schließelement
- 12: Stirnfläche
- 13: Dämpfungsanschlag
- 14: Dämpfungselement
- 15: Dämpfungsschuh
- 16: Gehäuseoberteil
- 17: Gehäuseunterteil
- 18: Kopfteil
- 19: Öffnung

## Patentansprüche

1. Elektromagnetisch betätigtes Ventil (1), welches ein Magnetteil (2), ein bewegliches Ankerelement (7), ein Federelement (8) und ein Ventilteil (9) aufweist, wobei das Magnetteil wenigstens eine auf einen Spulenkörper (3) gewickelte Magnetspule (4), ein Flussleitelement (5) und einen Mittelpol (6) und das Ventilteil (9) ein mit dem Ankerelement (7) zusammen wirkendes, an einem Ventilsitz (10) das Öffnen und Schließen des Ventils steuerndes Schließelement (11) aufweisen, das Ankerelement (7) als Klappenanker ausgebildet ist, welcher über ein Dämpfungselement (14) mit dem Mittelpol (6) zusammenwirkt und das Ankerelement (7) und das Ventilteil (9) in einem Gehäuse aufgenommen sind, wobei das Ankerelement (7), das Flussleitelement (5), das Schließelement (11), das Federelement (8) und das Dämpfungselement (14) innerhalb des Gehäuses in einem druckdichten Raum angeordnet sind, und das Dämpfungselement (14) einen Dämpfungsanschlag (13) aufweist, **dadurch gekennzeichnet, dass** das Schließelement (11) und das Dämpfungselement (14) als integraler Dämpfungsschuh (15) ausgebildet sind.

2. Ventil nach Anspruch 1, **dadurch gekennzeichnet, dass** das Flußleitelement (5) als Bügel ausgebildet ist, welche am Umfang der Magnetspule (4) angeordnet ist.

3. Ventil nach Anspruch 1, **dadurch gekennzeichnet, dass** das durch das Ankerelement (7) zum Öffnen und Schliessen des Ventiles (1) betätigte Schließelement (11) einen Schirmverschlussstopfen mit einer Schirmmembran ist.

4. Ventil nach Anspruch 3, **dadurch gekennzeichnet, dass** der Schirmverschlussstopfen flexibel ist und insbesondere aus Silikonkautschuk besteht.

5. Ventil nach Anspruch 1, **dadurch gekennzeichnet, dass** der Dämpfungsschuh (15) flexibel ist und direkt am Ankerelement (7) aufsteckbar oder an diesem angespritzt ist.

## Claims

1. Electromagnetically actuated valve (1), which has a magnetic part (2), a moveable armature element (7), a spring element (8) and a valve part (9), the magnetic part having at least one magnet coil (4) wound onto a coil form (3), a flux guide element (5) and a middle pole (6), and the valve part (9) having a closing element (11) co-operating with the armature element (7) and controlling the opening and closing of the valve at a valve seat (10), the armature element (7) being designed as a flap-type armature which co-operates via a damping element (14) with the middle pole (6), and the armature element (7) and the valve part (9) being received in a housing, the armature element (7), the flux guide element (5), the closing element (11), the spring element (8) and the damping element (14) being arranged within the housing in a pressure-tight space, and the damping element (14) having a damping stop (13), **characterized in that** the closing element (11) and the damping element (14) are designed as an integral damping shoe (15).

2. Valve according to Claim 1, **characterized in that** the flux guide element (5) is designed as a yoke which is arranged on the circumference of the magnet coil (4).

3. Valve according to Claim 1, **characterized in that** the closing element (11) actuated by the armature element (7) for opening and closing the valve (1) is a screening plug with a screening diaphragm.

4. Valve according to Claim 3, **characterized in that** the screening plug is flexible and consists, in particular, of silicone rubber.

5. Valve according to Claim 1, **characterized in that** the damping shoe (15) is flexible and can be slipped directly on the armature element (7) or is integrally moulded on the latter.

## Revendications

1. Soupape à commande électromagnétique (1) comprenant un électroaimant (2), un induit (7) mobile, un ressort (8) et une soupape (9), l'électroaimant se composant d'au moins un enroulement électromagnétique (4) sur un corps de bobine (3), un élément de guidage de flux (5) et un pôle central (6) et la pièce de soupape (9) comporte un élément de fermeture (11) coopérant avec l'induit (7) et commandant l'ouverture et la fermeture de la soupape au niveau du siège de soupape (10), l'induit (7) étant sous forme d'armature battante coopérant par l'intermédiaire d'un élément amortisseur (14) avec le pôle central (6) et l'induit (7) et la pièce de soupape (9) sont logés dans un boîtier, l'induit (7), l'élément de guidage de flux (5), l'élément de fermeture (11), l'élément de ressort (8) et l'élément amortisseur (14) étant logés dans une chambre étanche à la pression dans le boîtier et l'élément amortisseur (14) comporte une butée d'amortissement (13),
**caractérisée en ce que**
l'élément de fermeture (11) et l'élément amortisseur (14) forment un patin amortisseur (15) en une seule pièce.

2. Soupape selon la revendication 1,
**caractérisée en ce que**
l'élément de guidage de flux (5) est en forme d'étrier prévu autour de la bobine électromagnétique (4).

3. Soupape selon la revendication 1,
**caractérisée en ce que**
l'élément de fermeture (11) actionné par l'élément d'induit (7) pour ouvrir et fermer la soupape (1) comporte un bouchon d'obturation en forme d'écran avec une membrane écran.

4. Soupape selon la revendication 3,
**caractérisée en ce que**
le bouchon à écran est souple et il est notamment réalisé en caoutchouc au silicone.

5. Soupape selon la revendication 1,
**caractérisée en ce que**
le patin amortisseur (15) est souple et est engagé directement sur l'induit (7) ou est injecté sur celui-ci.
